# EUROPÄISCHE PATENTSCHRIFT

(11) **EP 1 269 757 B1**
(45) Veröffentlichungstag und Bekanntmachung des Hinweises auf die Patenterteilung: **01.06.2005**
(21) Anmeldenummer: 01933760.9
(22) Anmeldetag: 27.03.2001
(51) Int. Cl.: H04N 9/097

(54) **OPTISCHE TRÄGER- UND GEHÄUSEANORDNUNG ZUR AUFNAHME EINES FARBTEILERSYSTEMS SOWIE MEHRERER BILDWANDLER**
OPTICAL CARRIER AND HOUSING ARRANGEMENT FOR RECEIVING A COLOR SPLITTER SYSTEM AND SEVERAL IMAGE CONVERTERS
ENSEMBLE SUPPORT ET BOITIER OPTIQUE SERVANT A RECEVOIR UN SYSTEME SEPARATEUR DE COULEURS ET PLUSIEURS CONVERTISSEURS D'IMAGE

(30) Priorität: 27.03.2000 DE 10015222
(43) Veröffentlichungstag der Anmeldung: 02.01.2003
(73) Patentinhaber: Cobra electronic GmbH, 07745 Jena (DE)
(72) Erfinder: KOTHMEIER, Georg-Emil, 85051 Ingolstadt (DE)
(74) Vertreter: Kruspig, Volkmar, Dipl.-Ing.
(86) Internationale Anmeldenummer: PCT/EP2001/003476
(87) Internationale Veröffentlichungsnummer: WO 2001/074088

(56) Entgegenhaltungen:
- EP-A- 0 773 673
- US-A- 3 653 748
- PATENT ABSTRACTS OF JAPAN vol. 018, no. 069 (E-1502), 4. Februar 1994 (1994-02-04) & JP 05 284412 A (SONY CORP), 29. Oktober 1993 (1993-10-29)
- PATENT ABSTRACTS OF JAPAN vol. 017, no. 287 (E-1374), 2. Juni 1993 (1993-06-02) & JP 05 014909 A (SONY CORP), 22. Januar 1993 (1993-01-22)
- PATENT ABSTRACTS OF JAPAN vol. 1995, no. 07, 31. August 1995 (1995-08-31) & JP 07 095599 A (HOEI:KK), 7. April 1995 (1995-04-07)
- PATENT ABSTRACTS OF JAPAN vol. 016, no. 562 (P-1456), 3. Dezember 1992 (1992-12-03) & JP 04 214521 A (MATSUSHITA ELECTRIC IND CO LTD), 5. August 1992 (1992-08-05)

## Beschreibung

Die Erfindung betrifft eine optische Träger- und Gehäuseanordnung zur Aufnahme eines Farbteilersystems sowie mehrerer Bildwandler, insbesondere CCD-Empfänger, gemäß Oberbegriff des Patentanspruchs 1.

Aus der deutschen Offenlegungsschrift DE 197 43 526 A1 ist ein Mehrfacharray-Optikmodul für eine gekapselte CCD-Empfänger aufweisende Farbkamera bekannt. Dort ist eine Strahlteileranordnung in Prismenform mit wellenlängenselektiven Spiegelschichten zur Trennung der einfallenden Strahlung in mindestens drei Spektral-Nachweiskanäle gezeigt, wobei die CCD-Empfänger mit den lichtaustrittsseitigen Flächen der Strahlteileranordnung stoffschlüssig verbunden sind. Die aufgebrachte Schichtenfolge umfaßt drei separate Einzelfilter mit je einer Vielschichtkombination unter Anwendung eines sogenannten Transferverfahrens.
Mit einer solchen Mehrfach-CCD-Empfänger aufweisenden Kamera kann im Vergleich zu mit Farbfiltern versehenen Ein-Chip-Kameras die Auflösung bei gleicher Pixelanzahl erhöht werden. So wird jedes Farbauszugssignal mit einer Auflösung dargestellt, die dem vollständigen Auflösungsvermögen eines CCD-Schwarz-Weiß-Empfängers entspricht. Ebenfalls positiv ist die verbesserte Farbtreue und Farbauflösung im Vergleich zu Ein-Chip-Kameras bei gleichzeitiger höherer Lichtempfindlichkeit, wodurch sich eine erhebliche Marktrelevanz insbesondere für den Bereich der Medizintechnik ergibt.

Die Farbaufteilung von Mehrfach-CCD-Chip-Kameras wird über ein kompliziertes Farbteilerprisma vorgenommen. Die Chips sind wie dargelegt entweder direkt auf dem Farbteilerprisma fixiert oder mit einem geringen Luftabstand zum Prisma an den inneren Gehäusewänden der Kamera angebracht. Für den letzteren Fall sind besonders komplizierte Justieraufbauten notwendig, so daß bei der Herstellung sich erheblich höhere Kosten ergeben.

Ein Dreifarbenteilersystem ist aus der US-A-5,305,146 bekannt, wobei dort eine recht komplizierte Anordnung aus Farbfiltern und Zylinderlinsen notwendig ist, was zu Problemen dann führt, wenn eine Miniaturisierung der Gesamtanordnung angestrebt wird.

Um den Montageaufwand bei der Herstellung von CCD-Kameras zu reduzieren, wurde gemäß JP-6-180414 A vorgeschlagen, von einer Gehäuseanordnung auszugehen, die einen vorgefertigten Prismenblock aufweist.
In einem Gehäuse befindliche CCD-Chips werden in U-förmige Aussparungen eingebracht und dort nach erforderlicher Justage durch Kleben befestigt. Die Gesamtabmessungen der dortigen Anordnung reduzieren sich um die Tiefe der U-förmigen Aussparungen, welche den größten Teil der CCD-Empfänger aufnehmen. Eine Integration von Teilen der Kopf- und/oder Ansteuerelektronik ist gemäß JP-6-180414 A nicht möglich.

Eine unmittelbare mechanische Verbindung zwischen CCD-Chips und den strahlungsausgangsseitigen Flächen einer Prismen-Strahlteileranordnung zeigt die JP-5-14910 A, wobei dort zusätzlich auf einer weiteren Seite des Prismas ein Verdrahtungsträger mit integrierten Schaltkreisen vorgesehen ist, welche Teile der Signalvorverarbeitungselektronik umfassen.

Gemäß der japanischen offengelegten Patentanmeldung JP-04214521 A wurde weiterhin vorgeschlagen, einen Strahlteiler auf der Basis von beschichteten Glasplatten, welche in einen durchsichtigen Harzblock eingegossen sind, auszubilden. Für den Fall, daß Spiegelanordnungen als Strahlteiler Verwendung finden, ergibt sich jedoch der Nachteil, daß die Abbildung auf den CCD-Empfängern seitenverkehrt erfolgt, was optische Korrekturmaßnahmen nach sich zieht.

Alle vorgenannten Lösungen genügen nicht den Anforderungen einer gewünschten Miniaturisierung entsprechender Gehäuseanordnungen bzw. Kameraköpfen. Ein weiterer Nachteil der Verwendung von z.B. in Dual-Inline-Gehäusen befindlichen CCD-Bauelementen besteht darin, daß die Lage der lichtempfindlichen Fläche im Gehäuse bezogen auf das Deckglas mit einer herstellerseitigen Toleranz und mit einem Kippfehler behaftet ist. Diese zusätzlichen Fehlerquellen können nicht oder nur mit erheblichem montage- bzw. justageseitigen Aufwand beseitigt werden.

Aus dem Vorgenannten ist es daher Aufgabe der Erfindung, eine optische Träger- und Gehäuseanordnung zur Aufnahme eines Farbteilersystems sowie mehrerer Bildwandler, insbesondere CCD-Empfänger, anzugeben, welche miniaturisiert ausführbar ist und die den Einsatz von ungehäusten CCD-Bauelementen ermöglicht. Weiterhin soll die Träger- und Gehäuseanordnung mit geringen Fertigungskosten realisierbar sein und einen hohen Vorfertigungsgrad der in ihr einzusetzenden Baugruppen oder Bauteile ermöglichen.

Die Lösung der Aufgabe der Erfindung erfolgt mit einer optischen Träger- und Gehäuseanordnung gemäß den Merkmalen des Patentanspruchs 1, wobei die Unteransprüche mindestens zweckmäßige Ausgestaltungen und Weiterbildungen umfassen.

Der Grundgedanke der Erfindung besteht darin, von einem metallischen bzw. leit- und damit erodierfähigen Gehäuseblock auszugehen, welcher eine Strahlungseingangsöffnung an einer der Seitenflächen sowie Strahlungsausgangsöffnungen an den übrigen Seitenflächen besitzt. Im Strahlengang ist im Inneren des Blocks eine nutförmige Aufnahme mit entsprechenden Anschlagflächen zum Fixieren eines an sich bekannten Spiegel-Filter-Farbteilersystems vorgesehen. Das Spiegel-Filter-Farbteilersystem kann vorgefertigt werden und wird nach optischer Prüfung in die entsprechende Ausnehmung bzw. die Befestigungsnuten im Gehäuseblock eingesetzt und dort z.B. durch Kleben fixiert.

Auf erfindungsgemäß vorgesehenen Verdrahtungsträgermodulen sind CCD-Nacktchips vorzugsweise in Flip-Chip-Technologie montiert, wobei auf dem Verdrahtungsträgermodul eine Ansteuer- und Auswerteelektronik integriert ist. Die face-down montierten CCD-Nacktchips befinden sich über einer Aussparung im Verdrahtungsträger, so daß die lichtempfindlichen Flächen freiliegen.

Die Verdrahtungsträgermodule werden vor den Strahlungsausgangsöffnungen des Blocks justiert und dort bevorzugt stoffschlüssig positioniert respektive befestigt.
Ein weiterer erfindungsgemäßer Ansatz zur Lösung der Aufgabenstellung besteht darin, daß eine elektronische Korrektur der durch das Spiegel-Filter-Farbteilersystem hervorgerufenen seitenverkehrten Abbildung mittels der integrierten Ansteuerund Auswerteelektronik erfolgt.

In einer bevorzugten Ausführungsform ist eine starre Leiterplatte mit CCD-Ansteuerelektronik vorhanden, die die Deckfläche des Blocks verschließend auf diesem angeordnet wird, wobei flexible Verbindungsabschnitte von der starren Leiterplatte ausgehen und zu den Verdrahtungsträgermodulen, enthaltend die CCD-Nacktchips, führen. Bei einer solchen Konfiguration besteht die Möglichkeit, nach Befestigung der starren Leiterplatte auf der Deckfläche des Blocks die Verdrahtungsträgermodule über die flexiblen Abschnitte nach unten klappend seitlich vor die Strahlungsausgangsöffnungen zu positionieren und dort nach entsprechender Justage z.B. durch Kleben zu fixieren.

Um den Vorfertigungsgrad und die Möglichkeit elektrischer Vorprüfungen zu erhöhen, wird bei einer weiteren bevorzugten Ausführungsform davon ausgegangen, eine Verbundleiterplatte auszubilden, welche einen zentralen Abschnitt für die CCD-Ansteuerelektronik sowie mindestens drei Abschnitte zur Aufnahme der CCD-Nacktchips und zugehöriger Kopfelektronik aufweist. Zwischen dem zentralen Abschnitt und den Abschnitten zur Aufnahme der CCD-Nacktchips sind flexible elektrisch leitende Bereiche ausgebildet.
Die Verbundleiterplatte kann auf einem ablösbaren Hilfsrahmen zur Erleichterung der Bestückung und der elektrischen Prüfung montiert sein.

Die erfindungsgemäße optische Träger- und Gehäuseanordnung erfüllt also die Funktion der Halterung der Spiegel und Filter des Farbteilersystems, der Befestigung der CCD-Nacktchips sowie der Halterung der CCD-Ansteuerelektronik. Der Verbund CCD-Chips, Chipträger, Ansteuerelektronik mit Gehäuse und Farbteilersystem wird über die beschriebenen Verdrahtungsträgermodule respektive die Verbundleiterplatte erreicht, wobei als Chipträgermaterialien sowohl keramische Werkstoffe als auch Kunststoff-Folien oder herkömmliches FR4-Leiterplattenmaterial Anwendung finden können.

Die Nacktchips werden auf dem Trägermaterial face-down mittels Flip-Chip-Technologie z.B. mittels Leitkleber kontaktiert. Sowohl die Verdrahtungsträgermodule für die CCD-Nacktchips als auch die starre Leiterplatte mit CCD-Ansteuerelektronik können separat gefertigt und den notwendigen elektronischen und sonstigen Prüfungen unterzogen werden.

Die geforderte Genauigkeit zur Ausbildung der notwendigen Öffnungen und Aussparungen im Gehäuseblock kann durch Anwendung der Drahterodiertechnik gewährleistet werden.

Die Erfindung soll nachstehend anhand eines Ausführungsbeispiels sowie unter Zuhilfenahme von Figuren näher erläutert werden.

Hierbei zeigen:
- Fig. 1: eine Draufsicht sowie Seitenansichten des Gehäuseblocks zur Aufnahme eines Farbteilersystems sowie mehrerer Bildwandler;
- Fig. 2: eine Prinzipdarstellung eines Verdrahtungsträgermoduls für CCD-Nacktchips in Draufsicht sowie Seitenansicht; und
- Fig. 3: eine prinzipielle Darstellung einer Verbundleiterplatte, umfassend einen zentralen Abschnitt für die CCD-Ansteuerelektronik sowie mindestens drei Abschnitte zur Aufnahme der CCD-Nacktchips und zugehöriger Kopfelektronik.

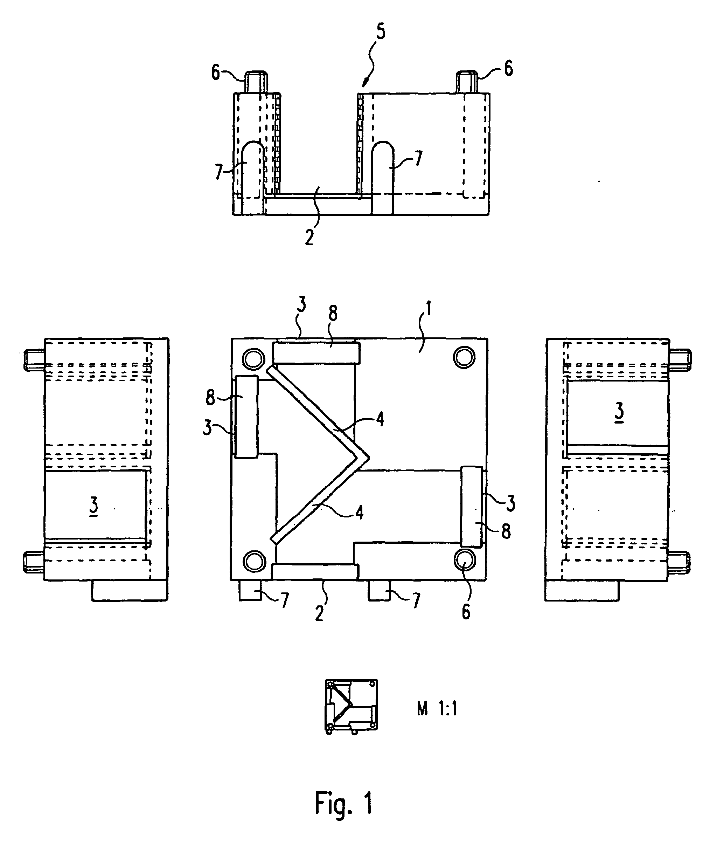

Der in der Fig. 1 gezeigte Gehäuseblock 1 besitzt eine Strahlungseingangsöffnung 2 sowie drei Strahlungsausgangsöffnungen 3. Im Inneren des Gehäuseblocks 1 sind Befestigungsnuten 4 zum Fixieren eines Spiegel-Filter-Farbteilersystems vorgesehen.

Aus den Seitenansichten wird deutlich, daß der Gehäuseblock 1 eine offene Deckfläche 5 mit dort vorgesehenen Befestigungsbolzen 6 aufweist.

Selbstverständlich können im Gehäuseblock 1 nicht gezeigte weitere Aussparungen zum Anbringen des Blocks vorgesehen sein. Die Vorsprünge 7 im Bereich der Strahlungseingangsöffnung 2 können beispielsweise dem Fixieren einer Kameraoptik (nicht gezeigt) dienen.

Ausnehmungen 8 insbesondere im Bereich der Strahlungsausgangsöffnungen 3 innerhalb des Gehäuseblocks 1 dienen der Aufnahme von weiteren optischen Elementen wie beispielsweise Filtern oder Linsen je nach Einsatzzweck der Gesamtanordnung bzw. den verwendeten CCD-Empfängern.

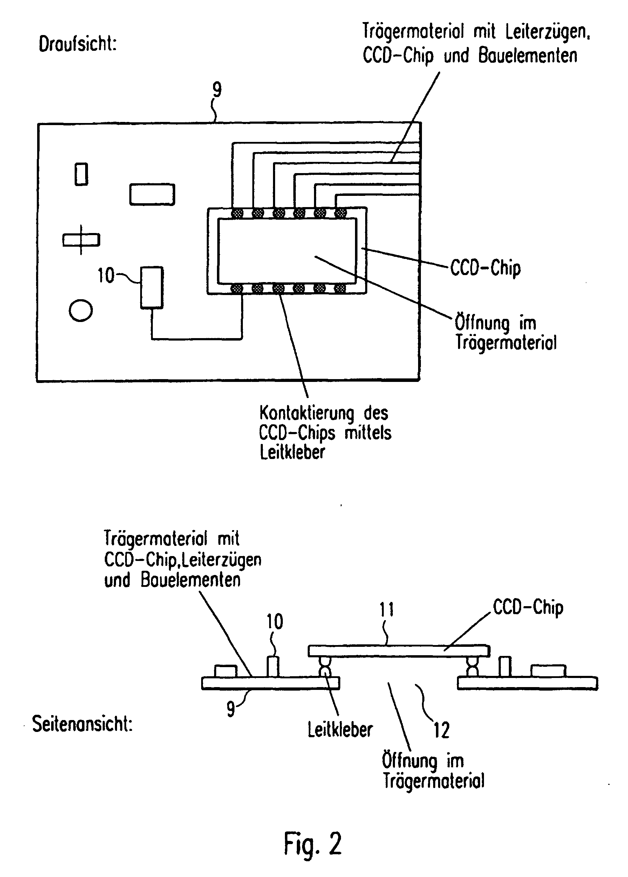

Die in der Fig. 2 gezeigten Verdrahtungsträgermodule 9 in Form von Einzelleiterplatten dienen der Befestigung von notwendigen elektronischen Bauelementen 10, aber auch dem Fixieren des CCD-Nacktchips 11. Der CCD-Nacktchip 11 wird in Flip-Chip-Technologie face-down über einer Öffnung 12 im Verdrahtungsträger 9 z.B. durch Leitkleben elektrisch und mechanisch kontaktiert.

Die entsprechend komplettierten und geprüften Verdrahtungsträgermodule 9 werden dann mit der Öffnung 12 und dort befindlichem CCD-Nacktchip 11 vor den jeweiligen Strahlungsausgangsöffnungen 3 im Gehäuseblock 1 positioniert, justiert und dort bevorzugt stoffschlüssig fixiert.

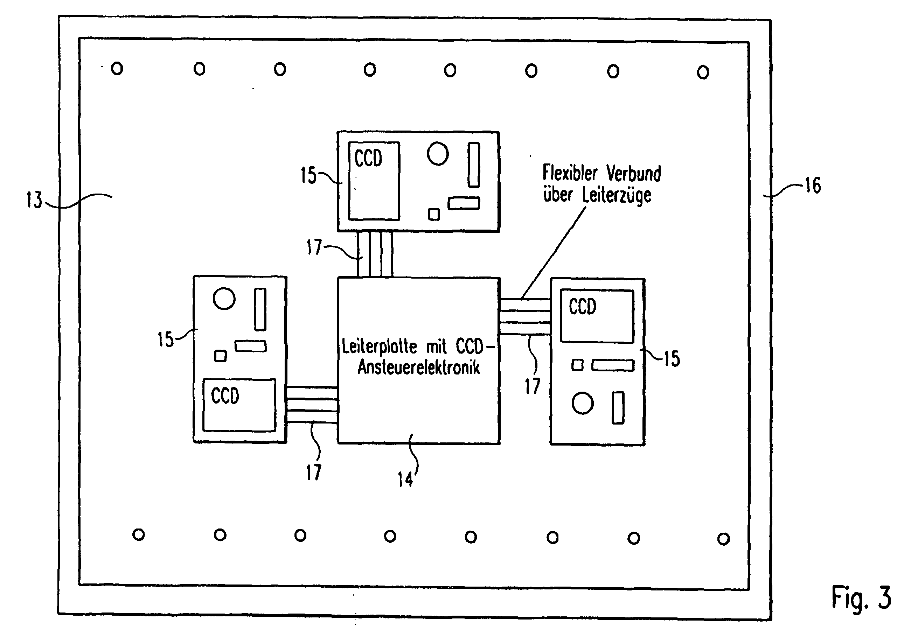

Bei der Ausführungsform nach Fig. 3 wird von einer Verbundleiterplatte 13 ausgegangen, welche in einem zentralen Abschnitt 14 die notwendige CCD-Ansteuer- und Auswerteelektronik aufweist.

Darüber hinaus sind mindestens drei weitere Abschnitte 15 zur Aufnahme der CCD-Nacktchips und zugehöriger Kopfelektronik vorhanden, wobei zwischen dem zentralen Abschnitt 14 und den weiteren Abschnitten 15 flexible, elektrisch leitende Bereiche 17 ausgebildet sind.

Die so ausgebildete Verbundleiterplatte kann nach Ablösen von einem Hilfsrahmen 16 mit ihrem zentralen Abschnitt 14, quasi einen Deckel des Gehäuseblocks 1 bildend, mit Hilfe der Befestigungsbolzen 6 an diesem montiert werden.

Die weiteren Abschnitte 15 werden dann über die flexiblen Verbindungsbereiche 17 nach unten vor die jeweiligen Strahlungsausgangsöffnungen 3 im Gehäuseblock 1 weggeklappt und dort justiert sowie positioniert und befestigt.
Dadurch, daß sowohl die Kopf- als auch die Ansteuerelektronik systemintegriert sind, kann die notwendige Justage zwischen CCD-Nacktchip und Abbildung über das Farbteilersystem quasi online ausgeführt werden, was zu einer Reduzierung der Herstellungskosten und zu einer Verkürzung der Fertigungszeit führt.

Die mit dem vorstehenden Ausführungsbeispiel beschriebene optische Träger- und Gehäuseanordnung mit Farbteilersystem und CCD-Empfängern als Bildwandler kann bevorzugt für miniaturisierte Mehrchip-CCD-Farbkameras Verwendung finden und in der Endoskopie, Laparoskopie oder aber auch im intraoralen Bereich eingesetzt werden.
Der Gehäuseblock selbst ist als Standardmodul ebenso wie die Verdrahtungsträger und die Verbundleiterplatte ausführbar, wobei die Möglichkeit besteht, CCD-Nacktchips unterschiedlicher Selektivität oder sonstiger Eigenschaften einzusetzen, aber auch im Gehäuseblock je nach Anwendungsfall differenzierte Farbteilersysteme und/oder Filterkombinationen zu verwenden.

### Bezugszeichenliste

- 1: Gehäuseblock
- 2: Strahlungseingangsöffnung
- 3: Strahlungsausgangsöffnung
- 4: Befestigungsnut
- 5: offene Deckfläche des Gehäuseblocks 1
- 6.: Befestigungsbolzen
- 7: Vorsprünge
- 8: Ausnehmungen
- 9: Verdrahtungsträgermodul
- 10: elektronische Bauelemente
- 11: CCD-Nacktchip
- 12: Öffnung im Verdrahtungsträgermodul
- 13: Verbundleiterplatte
- 14: zentraler Abschnitt
- 15: weitere Abschnitte
- 16: Hilfsrahmen
- 17: flexibler Verbindungsbereich

## Patentansprüche

1. Optische Träger- und Gehäuseanordnung zur Aufnahme eines Farbteilersystems sowie mehrerer Bildwandler, insbesondere CCD-Empfänger,
**gekennzeichnet durch**
- einen vorzugsweise metallischen Gehäuseblock mit einer Strahlungseingangsöffnung an einer der Seitenflächen sowie Strahlungsausgangsöffnungen an den übrigen Seitenflächen, wobei im Strahlengang im Inneren des Blocks Befestigungsnuten zum Fixieren eines von der offenen Deckfläche des Blocks zugänglichen Spiegel-Filter-Farbteilersystems vorgesehen sind;
- Verdrahtungsträgermodule für CCD-Nacktchips und eine Ansteuer- und Auswerteelektronik, wobei die CCD-Nacktchips face-down über eine jeweilige Aussparung im Verdrahtungsträger kontaktiert sowie die Module vor den Strahlungsausgangsöffnungen des Blocks justiert und stoffschlüssig positioniert sind, und
- eine elektronische Korrektur der **durch** das Spiegel-Filter-Farbteilersystem hervorgerufenen seitenverkehrten Abbildung mittels der Ansteuer- und Auswerteelektronik.

2. Anordnung nach Anspruch 1,
**dadurch gekennzeichnet, daß**
eine starre Leiterplatte mit CCD-Ansteuerelektronik die Deckfläche des Blocks verschließend auf diesem befestigt ist, wobei über flexible Abschnitte die starre Leiterplatte mit mehreren Verdrahtungsträgermodulen, enthaltend CCD-Nacktchips, verbunden ist, welche seitlich nach unten klappend jeweils vor den jeweiligen Strahlungsausgangsöffnungen justiert und dort bevorzugt durch Kleben fixiert sind.

3. Anordnung nach Anspruch 2,
**gekennzeichnet durch**
eine Verbundleiterplatte, umfassend einen zentralen Abschnitt für die CCD-Ansteuerelektronik sowie mindestens drei Abschnitte zur Aufnahme der CCD-Nacktchips und zugehöriger Kopfelektronik, wobei zwischen dem zentralen Abschnitt und den leitenden Abschnitten zur Aufnahme der CCD-Nacktchips flexible, elektrisch leitende Bereiche ausgebildet sind.

4. Anordnung nach Anspruch 3,
**dadurch gekennzeichnet, daß**
die Verbundleiterplatte auf einem ablösbaren Hilfsrahmen zur Erleichterung der Bestückung und elektrischen Prüfung montiert ist.

5. Miniaturisierte Mehrchip-CCD-Farbkamera mit einer Anordnung nach einem der vorangegangenen Ansprüche.

## Claims

1. Optical carrier and housing arrangement to accommodate a color-separation system as well as several image converters, in particular CCD receivers,
**characterized by**
- a preferably metallic housing block with a radiation entrance opening in one of the side surfaces as well as radiation exit openings in the remaining side surfaces, such that in the beam path in the interior of the block attachment grooves are provided to fix in position a mirror/filter color-separation system accessible from the open cover surface of the block;
- wiring-carrier modules for bare CCD chips as well as drive and evaluation electronics, wherein the bare CCD chips make contact face-down above an associated aperture in the wiring carrier, and the modules are adjusted in front of the radiation exit openings in the block and fused into position; and
- electronic correction of the laterally reversed image produced by the mirror/filter color-separation system, by means of the drive and evaluation electronics.

2. Arrangement according to Claim 1,
**characterized in that** a rigid printed-circuit board with CCD-drive electronics is fixed to the cover surface of the block so as to close the block off, such that by way of flexible sections the rigid circuit board is connected to several wiring-carrier modules that contain bare CCD chips and are folded down at the sides, each then being adjusted in front of the associated radiation exit opening and fixed there, preferably by means of adhesive.

3. Arrangement according to Claim 2,
**characterized by** a composite circuit board comprising a central section for the CCD-drive electronics as well as at least three sections to support the bare CCD chips and associated head electronics, such that between the central section and the conductive sections to support the bare CCD chips flexible, electrically conductive regions are formed.

4. Arrangement according to Claim 3,
**characterized in that** the composite circuit board is mounted on a detachable subframe to facilitate assembly and electrical testing.

5. Miniaturized multiple-chip CCD color camera comprising an arrangement according to one of the preceding claims.

## Revendications

1. Ensemble formant support et boîtier optique servant à recevoir un système séparateur de couleurs et plusieurs convertisseurs d'images, en particulier des récepteurs à CCD, **caractérisé par** :
-- un bloc de boîtier, de préférence métallique, avec une ouverture d'entrée de rayonnement sur l'une des faces latérales ainsi que des ouvertures de sortie de rayonnement sur les autres faces latérales, dans lequel des gorges de fixation sont prévues dans le trajet du rayonnement à l'intérieur du bloc pour fixer un système séparateur de couleurs à miroir/filtre accessible depuis la face de couverture ouverte du bloc ;
-- des modules support de câblage pour des puces à CCD nues et une unité électronique de pilotage et d'évaluation, les puces à CCD nues étant mises en contact face vers le bas au-dessus d'un évidement respectif dans le support de câblage, et les modules sont ajustés devant les ouvertures de sortie de rayonnement du bloc et positionnés par coopération de matière, et
-- une correction électronique de l'image inversée produite par le système séparateur de couleurs à miroir/filtre, au moyen de l'unité électronique de pilotage et d'évaluation.

2. Ensemble selon la revendication 1, **caractérisé en ce qu'**une plaque à circuit rigide comportant une unité électronique de pilotage CCD est fixée sur le bloc en refermant la face de couverture de celui-ci, ladite plaque à circuit rigide étant reliée à plusieurs modules support de câblage, qui contiennent des puces CCD nues, lesquelles sont ajustées par basculement latéral vers le bas devant les ouvertures de sortie de rayonnement respectives et y sont fixées de préférence par collage.

3. Ensemble selon la revendication 2, **caractérisé par** une plaque à circuit composite, qui comprend un tronçon central pour l'unité électronique à CCD et au moins trois tronçons pour recevoir les puces CCD nues et l'électronique de tête associée, dans lequel des zones électriquement conductrices et flexibles sont réalisées entre le tronçon central et les tronçons conducteurs.

4. Ensemble selon la revendication 3, **caractérisé en ce que** la plaque à circuit composite est montée sur un cadre auxiliaire détachable pour faciliter la mise en place et la vérification électrique.

5. Ensemble selon l'une des revendications précédentes, **caractérisé par** son application à des appareils ou caméras photographiques en couleurs miniaturisé(e)s à plusieurs puces CCD.
